# EUROPEAN PATENT APPLICATION

(11) **EP 2 731 074 A1**
(43) Date of publication of application: **14.05.2014**
(21) Application number: 12306400.8
(22) Date of filing: 13.11.2012
(51) Int. Cl.: G06T 3/00

(54) **Method for reframing an image based on a saliency map**

(71) Applicant: Thomson Licensing, 92130 Issy-les-Moulineaux (FR)
(72) Inventor: Chevet, Jean-Claude, 35576 Cesson Sévigné (FR); Chamaret, Christel, 35576 Cesson Sévigné (FR); Urban, Fabrice, 35576 Cesson Sévigné (FR)
(74) Representative: Perrot, Sébastien

(57) **Abstract**

The present invention concerns a method and device for reframing an image using a framing window, the method comprising a step for obtaining at least one layout area and a saliency map in which the saliency created by said at least one layout area has been removed. The method is characterized in that it further comprises a step for adjusting the position of the framing window in order to avoid any overlap of the framing window with said at least one layout area.

## Description

### 1. Field of invention.

The present invention generally relates to a method and device for reframing an image based on a saliency map.

The invention may be used, for example in the image or video reframing context.

### 2. Technical background.

For navigation applications in a set of fixed images or videos, it is useful to be able to display all the images of videos at a single glance. For this purpose, it is interesting to generate a reduced size version of each fixed image or each image of the videos so that said images or videos are displayed simultaneously on a same screen and are able to be compared easily. Likewise, for a broadcast application of a video content on a mobile appliance having a small sized screen, e.g. on a mobile phone, it is necessary to generate a reduced size version of each image of the video in order to display them on the small sized screen.

Such applications requires the implementation of what is usually called a reframing method.

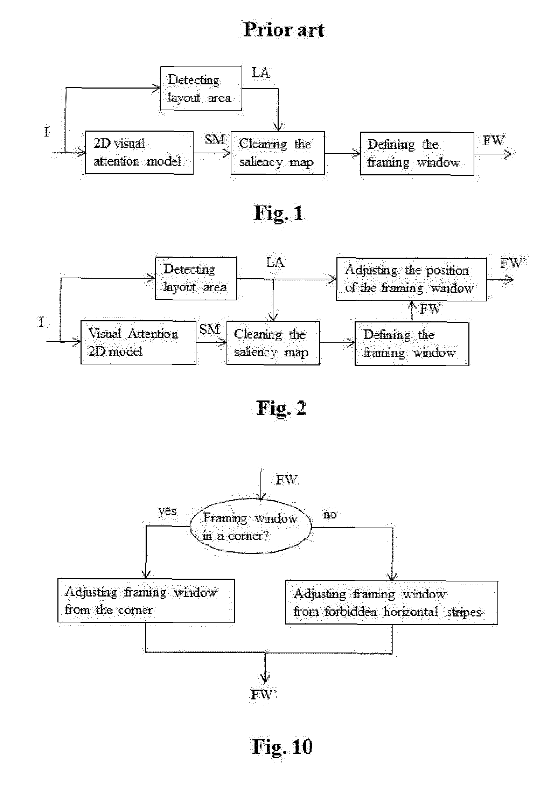

**Fig. 1** shows a diagram which illustrates the steps of a traditional reframing method.

A traditional reframing method generates a predefined reduced size image, from an image **I,** intended to be displayed on a reduced size screen. Usually, the reduced image takes into account the saliency of the image **I**, the output format, the output aspect ratio and/or the desired coverage ratio regarding the input image **I**, with a temporal filtering in case of videos, etc.

A traditional reframing method comprises generating a saliency map SM from the image **I**, detecting at least one layout area LA in the saliency map, cleaning the saliency map SM according to said at least one detected layout area LA, defining a framing (also called cropping) window FW according to said cleaned saliency map and cropping the input image **I** according to said framing window FW.

The framing window FW, which is smaller than the image **I,** contains the most salient points of the image **I** or the greatest number of salient points. The resulting sub-image is thus the part of the input image **I** with the most perceptual interest for the viewer contained in this image.

The European patent application EP1685288 provides an example of a method to generate a saliency map from an image **I**. Roughly speaking, the saliency map SM is generated from a two-dimensional visual attention model. This saliency map associates with each pixel of the image **I** a saliency value which is a function of the perceptual interest of the image pixel. The higher the perceptual interest of the image pixel, the higher the saliency value. Saliency values are for example normalized and comprised between 0 and 255. The saliency value is represented in the saliency map by a point having the same spatial coordinates as the source image pixel that it characterizes and a level of grey proportional to the saliency value of the pixel. The lightest points on the saliency map representing the most salient points of the source image. They correspond usually to areas of strong contrast in the image. Thus, usual contours and/or contrast detectors may be used.

Cleaning the saliency map avoids the framing window to be attracted by the detected layout areas LA which are usually regions with high saliency. For example, the saliency map SM may be cleaned according to at least one detected layout area LA by removing the saliency created by said at least one layout area. For that, for example, the saliency values of the points contained in said at least one layout area are set to zero. The saliency areas produced by said at least one layout areas LA are thus withdrawn or deleted in the saliency map. The saliency map is said "cleaned".

Defining a framing window according to a cleaned saliency map leads to a framing window which is no longer contaminated by the saliency of said at least one layout areas LA.

The problem of such a reframing method is that even if the size and position of the framing window is less affected by the saliency of the detected layout areas, it does not ensure always a good visual quality of a reframed sequence of images because some layout area (e.g. a logo) appear (at least partially) and disappear in the reframed sequence of images, creating inconfortable viewing artefacts.

### 3. Summary of the invention.

The present invention aims at alleviating automatically such artifacts by adjusting the position of the framing window in order to avoid any overlap of the framing window with a layout area such a logo.

According to a first embodiment, the position of the framing window is adjusted according to at least one forbidden horizontal image stripe defined from said at least one layout area.

According to a second embodiment, if a layout area belongs to a predetermined zone of said image, the position of the framing window is adjusted according to said predetermined zone.

According to a variant, a layout area having a rectangular shape, the step for adjusting the position of the framing window comprises:
- determining a signed vertical difference value between one of the horizontal border of a zone in which the layout area is located and one horizontal border of the framing window,
- determining a signed horizontal difference value is determined between one of the vertical border of a zone in which the layout area is located and one vertical border of the framing window,
- shifting the framing window according to either said signed horizontal difference value or said signed vertical difference value or both.

According to a variant the image belonging to a sequence of images, when the signed vertical difference value equals the signed horizontal difference value, the position of the framing window is adjusted according to the adjustment applied to the framing window in a previous image.

According to a variant, when the adjusted framing window goes outside the area of the image, the size of the adjusted framing window is reduced in order that it is defined over the image area.

According to a variant, the aspect ratio of the adjusted framing window conforms to the aspect ratio of the framing window.

According to a variant, at least one predetermined zone is located in a corner of said at least one image.

According to one of its material aspects, the invention concerns a device for reframing an image from a framing window comprising processing units configured for obtaining at least one layout area and a saliency map in which the saliency created by said at least one layout area has been removed. The device is **characterized in that** the processing units are further configured for adjusting the position of the framing window in order to avoid any overlap of the framing window with said at least one layout area.

The specific nature of the invention as well as other objects, advantages, features and uses of the invention will become evident from the following description of a preferred embodiment taken in conjunction with the accompanying drawings.

### 4. List of figures.

The embodiments will be described with reference to the following figures:
- **Fig. 1** shows a diagram of the step of the reframing method according to the prior art,
- **Fig. 2** shows a diagram of the step of the reframing method according to the invention,
- **Fig. 3** illustrates a first embodiment of the invention,
- **Fig. 4-6** illustrate a second embodiment of the invention,
- **Fig. 7-8** illustrate a variant of the invention,
- **Fig. 9** shows a device comprising processing units configured to implement the step of the method according to the invention.
- **Fig. 10** illustrates example of combination of these two embodiments

### 5. Detailed description of the invention.

**Fig. 2** shows a diagram of the steps of the reframing method according to the invention.

The references of **Fig. 1** which are identical to the references of **Fig.2** refer to identical elements.

The invention is not limited to specific methods for generating a saliency map from an image, for detecting at least one layout area from the saliency map, for cleaning the saliency map by removing the saliency created by said at least one layout area, for determining a framing window from the cleaned saliency map, and for cropping said at least one image according to said framing window.

What is mandatory for the invention is that a framing window generated with a cleaned saliency map and at least one layout area are available for an image to reframe, for example, by using the methods described in the introducing part or from any memory potentially located in a remote equipment.

According to the invention, the reframing method comprises a step for adjusting the position of the framing window FW in order to avoid any overlap of the framing window with said at least one layout area LA.

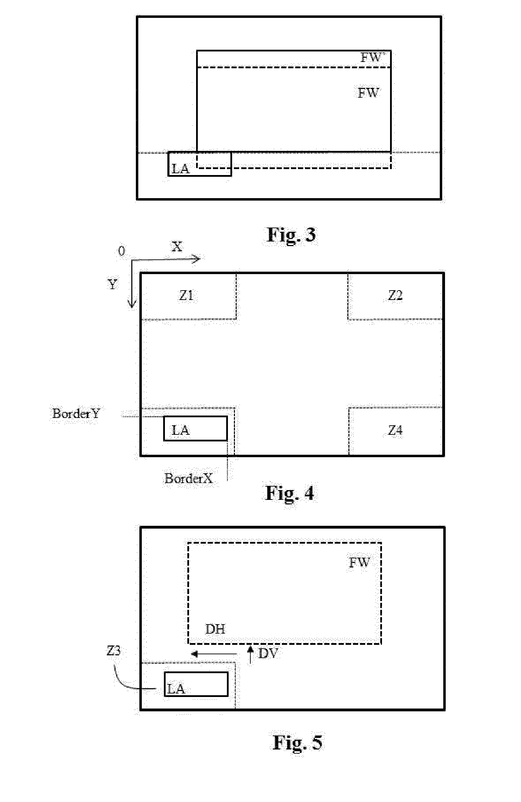

According to a first embodiment, illustrated in **Fig. 10** (right part) and **Fig. 3****,** the position of the framing window FW is adjusted according to at least one forbidden horizontal image stripe defined from at least one layout area LA. In the shown example, the framing window overlaps a layout area LA and would appear thus partially in the image reframed from such a framing window. According to this embodiment, a stripe is defined at the bottom of the image. This stripe is limited by the upper border of the layout area LA. The coordinates (position in the image) of the framing window FW are then adjusted in order to avoid the overlap between the framing window FW' (bold line in **Fig. 3****)** and the defined stripe.

Here only the vertical coordinate of the framing window is modified but the scope of the invention is not limited to this change.

A similar forbidden horizontal stripe may also be defined at the top of the image and the framing window may also be modified according to either this stripe located at the top of the image or to both the top and bottom stripes.

This embodiment is advantageous because the artefacts due to cropping into layout areas such as logo, sub-title, score,etc.. which are usually located either in the top or the bottom of an image is automatically removed in a reframed image.

According to a second embodiment, illustrated in **Fig. 10** (right part) and **Fig.4-6****,** if a layout area LA belongs to a predetermined zone Zi of the image I, the position of the framing window according FW is adjusted according to said predetermined zone Zi.

In the example of **Fig. 4****,** four predetermined rectangular zones Z1, Z2, Z3 and Z4 are predefined, each of them being located in a corner of the image **I** and having a size defined by two values: sizeY/4 and sizeX/4 where size Y and size X define the size of the image **I**.

The scope of the invention is not limited to this definition and the number of zones and any other predetermined zones located in any other places in the image **I** may also be considered.

Detecting if a layout area belongs to a predetermined zone of the image depends on the definition of these predetermined zones and the layout area such as their shape and location.

For example, as illustrated in **Fig. 4****,** a rectangular mask of a layout area LA may be scanned to determine its lowest vertical coordinate called BorderY and its highest horizontal coordinate called BorderX. Next, if BorderY <sizeY/4, then the layout area is located in the top of the image **I**, else if BorderY>3*sizeY/4 then the layout area LA is located in the bottom of the image **I**, else the layout area LA is not in any predetermined zones Zi. Next, if BorderX <sizeX/4, then the layout area is located in the left of the image **I**, else if BorderX>3*sizeX/4 then the layout area LA is located in the right of the image **I**, else the layout area LA is not in any predetermined zones Zi.

When a layout area LA is detected as located in a predetermined zone, here Z3, the position of the framing window is adjusted as follows (Fig. 5):
- a signed vertical difference value DV is determined between one of the horizontal border of a zone in which the layout area LA is located, here Z3, and one horizontal border of the framing window,
- a signed horizontal difference value DH is determined between one of the vertical border of a zone in which the layout area LA is located, here Z3, and one vertical border of the framing window, and
- shifting the framing window FW according to either of said signed horizontal difference value or said signed vertical difference value or both.

In **Fig. 5****,** the layout area LA is located in the zone Z3 and DV<0 and DH<0. In that case, the position of the framing window FW remains unchanged.

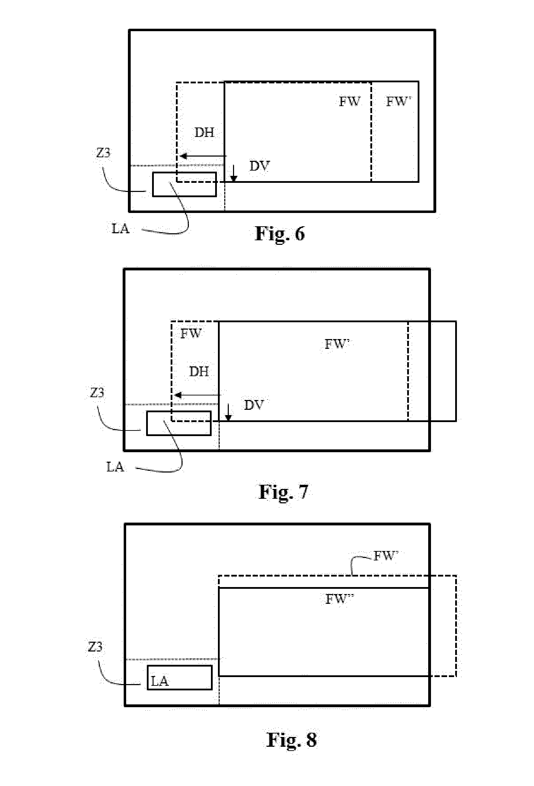

In **Fig. 6****,** DV>0 and DH<0 then, the position of the framing window FW is adjusted, for example, according to the smallest absolute value, here DV.

Other variants may be used to adjust the position of the framing window such as according to both the DH and DV values or combination, potentially weighted, of these values.

According to a variant relevant when a sequence of images is reframed, when the signed vertical difference value DV equals the signed horizontal difference value DH, the position of the framing window is adjusted according to the adjustment applied to the framing window in a previous image.

This variant is advantageous because it avoid some flickering artifacts due successive changes of the adjustement.

This variant requires that the adjustement applied to the framing window in a previous image is memorized. This adjustement is reset on a scene cut.

In some case illustrated in **Fig. 7****,** the adjusted framing window FW' goes outside the area of the image **I**. Then, the size of the adjusted framing window is reduced in order that it is defined over the image area. A new framing window FW" is then obtained.

The aspect ratio of the adjusted framing window FW' equals, according to a variant, to the aspect ratio of the framing window as shown in **Fig. 8****.** That means that the size of the adjusted framing window is reduced in order that the ratio of the number of rows over the number of columns of the framing window equals the ratio of the number of rows over the number of columns of the adjusted framing window.

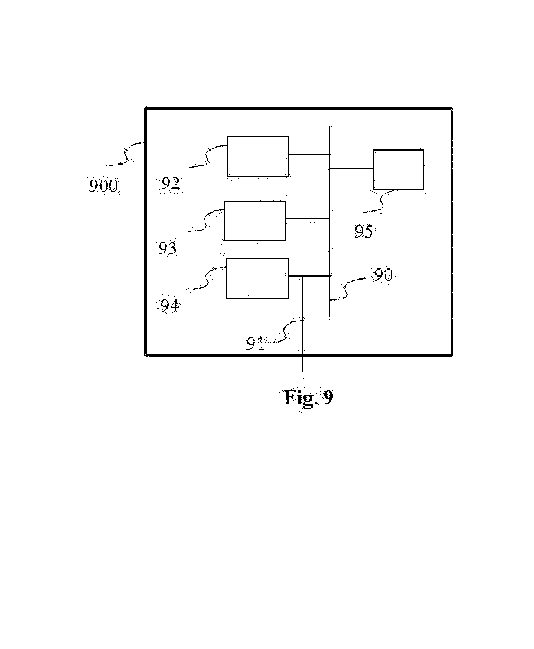

**Figure 9** shows a device 900 that can be used in a system that implements the method of the invention. The device comprises the following components, interconnected by a digital data- and address bus 90:
- a processing unit 93 (or CPU for Central Processing Unit);
- a memory 95 ;
- a Gaphical user interface 92;
- a network interface 94, for interconnection of the device 900 to other devices connected in a network via connection 91.

Processing unit 93 can be implemented as a microprocessor, a custom chip, a dedicated (micro-) controller, and so on. Memory 95 can be implemented in any form of volatile and/or non-volatile memory, such as a RAM (Random Access Memory), hard disk drive, non-volatile random-access memory, EPROM (Erasable Programmable ROM), and so on.

A saliency map of an image and at least one layout area LA may be obtained from the memory 95 or from a remote equipement via the connection 91 and the network interface 94.

The processing unit 93 and the memory 95 works together to adjust the position of a framing window in order to avoid any overlap of the framing window with layout area LA. The processing unit 93 and the memory 95 works also together to implement the embodiments and variants of the method disclose according to **Fig. 1-8****.**

According to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or according to another variant embodiment, as distinct electronic components integrated in a device or, according to yet another embodiment, in a form of a mix of hardware and software.

While not explicitly described, the present embodiments may be employed in any combination or sub-combination.

For example, the first embodiment (or one of its variant) may be combined with the second embodiment.

For that, According to a variant, a user selects one of the two embodiments to adjust the position of the framing window from, for example, the user graphical interface 92.

According to another variant, illustrated on **Fig. 9****,** if a layout area belongs to a predetermined zone of said at least one image, the position of the framing window is adjusted according to said predetermined zone, otherwise, the position of the framing window is adjusted according to at least one forbidden horizontal image stripes defined from said at least one layout area.

## Claims

1. Method for reframing an image using a framing window, the method comprising steps for obtaining at least one layout area and a saliency map in which the saliency created by said at least one layout area has been removed, **characterized in that** it further comprises a step for adjusting the position of the framing window in order to avoid any overlap of the framing window with said at least one layout area.

2. Method as claimed in claim 1, wherein the position of the framing window is adjusted according to at least one forbidden horizontal image stripe defined from said at least one layout area.

3. Method as claimed in claim 1 or 2, wherein if a layout area belongs to a predetermined zone of said image, the position of the framing window is adjusted according to said predetermined zone.

4. Method as claimed in claim 3, wherein a layout area having a rectangular shape, the step for adjusting the position of the framing window comprises:
- determining a signed vertical difference value between one of the horizontal border of a zone in which the layout area is located and one horizontal border of the framing window,
- determinging a signed horizontal difference value is determined between one of the vertical border of a zone in which the layout area is located and one vertical border of the framing window,
- shifting the framing window according to either said signed horizontal difference value or said signed vertical difference value or both.

5. Method as claimed in claim 4, wherein the image belonging to a sequence of images, when the signed vertical difference value equals the signed horizontal difference value, the position of the framing window is adjusted according to the adjustment applied to the framing window in a previous image.

6. Method as claimed in one of claims 3 to 5, wherein when the adjusted framing window goes outside the area of the image, the size of the adjusted framing window is reduced in order that it is defined over the image area.

7. Method as claimed in claim 6, wherein the aspect ratio of the adjusted framing window equals to the aspect ratio of the framing window.

8. Method as claimed in one of claims 3 to 7, wherein at least one predetermined zone is located in a corner of said at least one image.

9. Device for reframing an image from a framing window comprising processing units configured for obtaining at least one layout area and a saliency map in which the saliency created by said at least one layout area has been removed, **characterized in that** the processing units are further configured for adjusting the position of the framing window in order to avoid any overlap of the framing window with said at least one layout area.
